# EUROPEAN PATENT APPLICATION

(11) **EP 4 269 292 A1**
(43) Date of publication of application: **01.11.2023**
(21) Application number: 21909588.2
(22) Date of filing: 24.12.2021
(51) Int. Cl.: B65G 29/00

(54) **CAN CONVEYING SYSTEM**

(30) Priority: 25.12.2020 CN 202011561296
(71) Applicant: Foshan Arc Industrial Equipment Manufacturing Co., Ltd., Foshan, Guangdong 528308 (CN)
(72) Inventor: ULF, Reinhardt, Foshan, Guangdong 528399 (CN); ZHAO, Bisheng, Foshan, Guangdong 528311 (CN)
(74) Representative: Heeschen Pültz Patentanwälte PartGmbB
(86) International application number: PCT/CN2021/141368
(87) International publication number: WO 2022/135593

(57) **Abstract**

A can body conveying system comprises a turntable and an unloading conveying line, and the turntable is rotatably erected by a rotary shaft through its center; the turntable is integrated with a loading station and an unloading station of the process; the surface of the turntable is provided with several can locating positions in the circumferential direction; the unloading conveying line is set corresponding to the unloading station of the turntable. The unloading conveying line has a vertical conveying surface and a horizontal conveying surface, and the conveying surfaces are equipped with suction holes, and the negative pressure mechanisms are arranged on the back; the vertical conveying surface is provided with at least two conveying paths arranged in parallel longitudinally and the areas on the turntable facing each conveying path serve as the unloading cross-connection areas; in the unloading state, the can locating positions in the unloading cross-connection area correspond to and align with the conveying paths of the vertical conveying surface one by one, so that the can bodies in the unloading cross-connection area can detach from the turntable and transfer to the corresponding conveying path. The adoption of the present invention can effectively simplify equipment, reduce costs, and also help increase flexibility, increase production capacity, reduce energy consumption, and improve product quality consistency.

## Description

### TECHNICAL FIELD

The present invention belongs to the field of container processing machinery and equipment, in particular to a can body conveying system.

### BACKGROUND OF INVENTION

The can body mainly refers to a cylindrical sealed container that can be used to store materials. During the manufacturing of metal cans for containing products such as carbonated beverages, the outer surfaces of the can bodies need to be printed with patterns with different coatings. The printed patterns should not be touched to avoid damage during the conveying process after the printing process and before the drying process.

The existing relevant can body conveying systems usually work like this: after the surface printing is completed, the can bodies are blown from a rotatable printing turntable to a transfer turntable, and then blown from the transfer turntable to the next conveyor. The conveying belt uses a pin chain to hang the can bodies on the pins to ensure the outer surfaces of the can bodies don't come into contact with foreign objects. Therefore, the use of blowing way of conveying requires an additional transfer turntable device with a complex system structure, which is contrary to the principle of equipment simplification and cost control.

In addition, in existing relevant can body conveying systems, the typical conveying way for metal cans to the oven is a single row continuous pin chain transportation. A typical pin oven has multiple U-shaped pin chain paths to extend the distance the can bodies pass through the oven to ensure baking time. A typical can body baking time is 10 seconds, and the production speed of the can bodies is 1,800 cans per minute. Correspondingly, the path inside the typical pin chain oven is 32 meters. Therefore, the existing single row can body pin chain conveying can also cause problems such as large volume and high energy consumption of the oven. Meanwhile, there is a problem of poor flexibility in the continuous conveying of the entire pin chain, because the production speeds of the front-end and back-end processes may inevitably be uncoordinated due to various abnormalities in the actual production process. At this moment, the continuous conveying of the entire pin chain can affect the quality of the products by affecting the process time, and also directly affect the production capacity of the production line, indirectly increasing the production cost.

In view of this, it is the research topic of the present invention on how to design a can body conveying system that can solve the problems of high production cost caused by insufficient simplification of equipment, high energy consumption, poor flexibility, and inconsistent product quality of the existing single row can body pin chain conveying system.

### DISCLOSURE OF THE INVENTION

The present invention provides a can body conveying system, which aims to solve the problems of high production cost caused by insufficient simplification of equipment, high energy consumption, poor flexibility, and inconsistent product quality of the existing single row can body pin chain conveying system.

In order to achieve the above purpose, the present invention applies the technical solution:
A can body conveying system comprises a turntable and an unloading conveying line, wherein the turntable is rotatably erected by a rotary shaft through its center and the angle between the surface of the turntable and vertical direction is less than 20 degrees; the surface of the turntable is provided with several can locating positions in the circumferential direction, and the can locating position includes a loading station and an unloading station. The unloading conveying line is set corresponding to the unloading station of the turntable. The innovation of this system lies in the fact that the unloading conveying line has a vertical conveying surface and a horizontal conveying surface, and the vertical conveying surface is arranged vertically and faces the surface of the turntable, and the horizontal conveying surface is arranged along the horizontal plane or at an acute angle with the horizontal plane, and the horizontal conveying surface faces upwards; the vertical conveying surface and the horizontal conveying surface are equipped with suction holes, and the negative pressure mechanisms are arranged on the back to suck the can bodies under working conditions; the vertical conveying surface is provided with at least two conveying paths arranged in parallel longitudinally and the areas on the turntable facing each conveying path serve as the unloading cross-connection areas; in the unloading state, the can locating positions in the unloading cross-connection area correspond to and align with the conveying paths of the vertical conveying surface one by one, so that the can bodies on the can locating positions in the unloading cross-connection area can detach from the turntable and transfer to the corresponding conveying path.

The above-described technical solution is explained as follows:
In this solution, the angle between the surface of the turntable and vertical direction can be 0 degree, 10 degrees, or 13 degrees, preferably, the surface of the turntable is perpendicular to the horizontal plane.

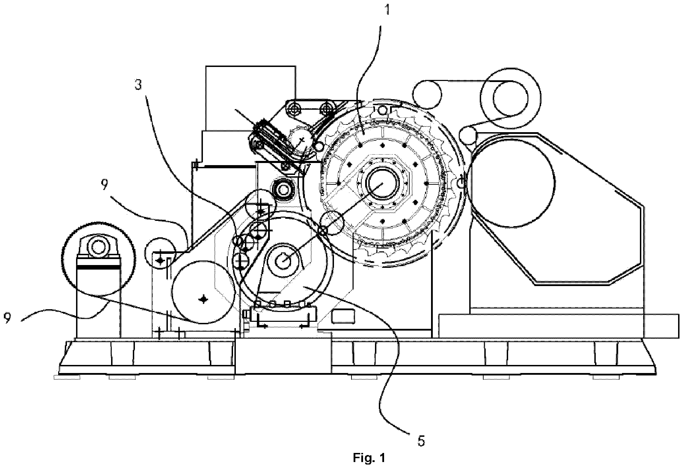

In this solution, the surface of the turntable comprises a loading station and an unloading station of the process. And there is no need for transfer for loading and unloading, and the transfer turntable shown in Figure 1 is omitted, which directly and effectively simplifies the system equipment, significantly reduces the system volume, and reduces equipment cost.

In this solution, the unloading cross-connection area is provided with a release mechanism; in the unloading state, when the can bodies are positioned on the can locating positions at the downstream end of the unloading cross-connection area, the release mechanism is activated to detach the can bodies from the surface of the turntable.

In this solution, preferably, the can locating positions of the unloading cross-connection area are set adjacently on the turntable.

In this solution, it is preferred that the unloading conveying line comprises three conveying paths and the corresponding three can locating positions are arranged adjacently, wherein the conveying path located in the middle position is set on the same plane as the rotating shaft of the turntable along the central axis of the conveying direction; alternately, the unloading conveying line comprises two conveying paths.

In this solution, the conveying system also includes at least one transition conveying line and at least one following conveying line, wherein the numbers of conveying paths of transition conveying lines, the following conveying lines, and the unloading conveying lines are equal; the conveying directions of transition conveying line and the following conveying line are the same as the conveying direction of the horizontal conveying surface of the unloading conveying line. The conveying paths of the conveying surface of the transition conveying line set downwards and the conveying surface of the following conveying line set upwards are equipped with suction holes and the negative pressure mechanisms are set on the back; the transition conveying line is connected between the downstream end of the unloading conveying line and the upstream end of the following conveying line to transfer the tank bodies from the unloading conveying line to the following conveying line.

In this solution, preferably, the conveying speed of the transition conveying line is adjustable; The conveying speed of the following conveying line is adjustable.

In this solution, preferably, a conveying box to the entrance of the oven is arranged above the downstream end of the following conveying line to transfer the can bodies to the oven. And the conveying box to the entrance of the oven is provided with a pick-and-place mechanism for the can bodies, and the width of the conveying box to the entrance of the oven matches the width of the oven.

In this solution, preferably, several can locating positions are evenly distributed on the surface of the turntable in the circumferential direction.

In order to solve the problems of high production cost caused by insufficient simplification of equipment, high energy consumption, poor flexibility, and inconsistent product quality of the single row can body pin chain conveying system in the prior art, the design principles and beneficial effects of the present invention are:
I. The present invention adopts the conveying line equipped with the negative pressure structure to replace the pin chain, enabling the loading station and unloading station of the process to be integrated on the turntable, thereby omitting the transfer turntable device (see Fig. 1), which simplifies the system, greatly saves space, and significantly improves the stability and cleanliness of the conveying line equipped with a negative pressure structure compared to the pin chain.
II. The present invention designs a structure with multiple conveying paths simultaneously loading and unloading materials from the turntable, which not only greatly improves production capacity, but also significantly saves the space occupied by the conveying device compared to the existing single conveying path; at the same time, a relatively independent unloading cross-connection area can a highly flexible combination and the present invention preferably provides the solution of two adjacent conveying paths and three adjacent conveying paths; in addition, the corresponding oven of the following process is equipped with multiple conveying paths correspondingly, which helps to reduce of the volume of the oven of the following process and reduce the energy consumption of the oven of the following process.
III. The present invention adopts a design of multiple conveying lines combined with segmented transition, that is, the conveying line is divided into the unloading conveying line and the following conveying line, and the transition conveying line is set to be connected between the downstream end of the unloading conveying line and the upstream end of the following conveying line to transfer the tank bodies from the unloading conveying line to the following conveying line. As the conveying speeds of the following conveying line and the transition conveying line can be adjusted separately, the space between the can bodies can be controlled by controlling the speed of the two. The beneficial effects of this function are: on the one hand, it is beneficial to solve the problem of reduction of production capacity caused by inconsistent pace between the front process and the following process; on the other hand, the conveying belt and printing disc have relatively independent drives, allowing the residence time of the can bodies in the oven to be set relatively independently and consistently, thus ensuring that the drying time of the can bodies in the oven is the same and the drying quality is consistent, which is conducive to improving product quality consistency.

### BRIEF DESCRIPTION OF THE DRAWINGS

Figure 1 is a schematic view of a can body conveying system of prior art;
Figure 2 is the schematic view of the can body conveying system of the embodiment of present invention;
Figure 3 is the view of the distribution of the unloading cross-connection area of the embodiment of the present invention;
Figure 4 is the view of the distribution of the unloading cross-connection area of another embodiment of the present invention;
Figure 5 is the view of the distribution of the unloading cross-connection area of the other embodiment of the present invention.

In the above figures: 1. Turntable; 11. Can locating position; 12. Unloading cross-connection area; 13. Loading station; 2. Unloading conveying line; 21. Vertical conveying surface; 22. Horizontal conveying surface; 3. Can body; 4. Conveying path; 41. Suction hole; 5. Transfer turntable; 6. Transition conveying line; 7. Following conveying line; 8. Conveying box to the entrance of the oven; 9. Pin chain.

### SPECIFIC EMBODIMENT

With reference to the accompanying drawings and embodiment, the present invention will be described in detail.

### Embodiment: A can body conveying system

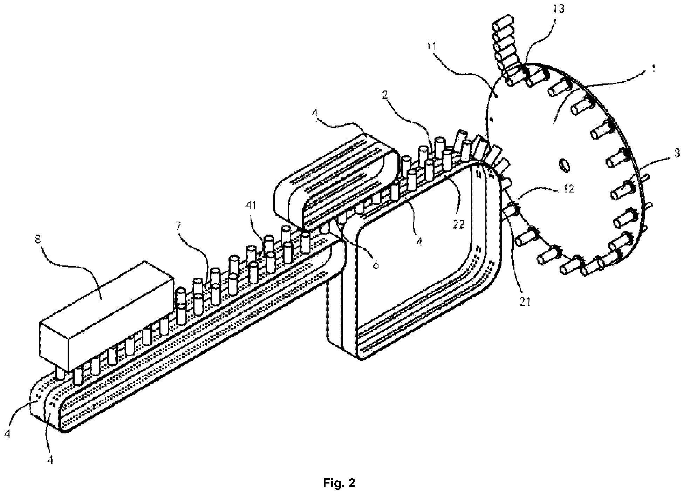

As shown in Fig. 2, a can body conveying system comprises a turntable 1 and an unloading conveying line 2, wherein the turntable 1 is rotatably erected by a rotary shaft through its center and the surface of the turntable 1 is perpendicular to the horizontal plane; the surface of the turntable 1 is provided with several can locating positions 11 in the circumferential direction, and the can locating position includes a loading station 13 and an unloading station. The unloading conveying line 2 is set corresponding to the unloading station of the turntable 1. The can locating positions 11 are evenly distributed on the surface of the turntable 1 in the circumferential direction.

The unloading conveying line 2 has a vertical conveying surface 21 and a horizontal conveying surface 22, and the vertical conveying surface 21 is arranged vertically and faces the surface of the turntable 1, and the horizontal conveying surface 22 is arranged along the horizontal plane, and the horizontal conveying surface 22 faces upwards; the vertical conveying surface 21 and the horizontal conveying surface 22 are equipped with suction holes 41, and the negative pressure mechanisms are arranged on the back to suck the can bodies 3 under working conditions.

The vertical conveying surface 21 is provided with at least two conveying paths 4 arranged in parallel longitudinally and the areas on the turntable 1 facing each conveying path 4 serves as the unloading cross-connection areas; the can locating positions 11 of the unloading cross-connection area 12 are set adjacently on the turntable 1. In the unloading state, the can locating positions 11 in the unloading cross-connection area 12 correspond to and align with the conveying paths 4 of the vertical conveying surface 21 one by one, so that the can bodies 3 on the can locating positions 11 in the unloading cross-connection area 12 can detach from the turntable 1 and transfer to the corresponding conveying path 4.

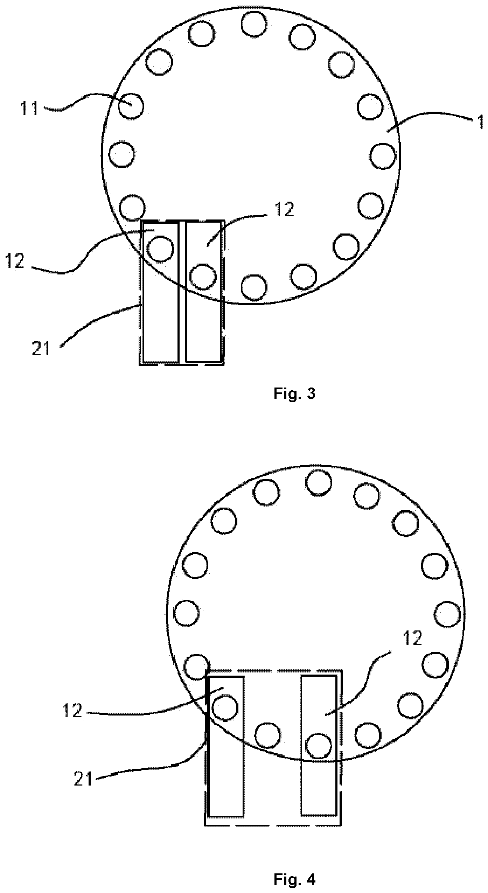

The unloading cross-connection area 12 is provided with a blowing device as a release mechanism; in the unloading state, when the can bodies 3 are positioned on the can locating positions 11 at the downstream end of the unloading cross-connection area 12, the release mechanism is activated to detach the can bodies 3 from the surface of the turntable 1. As shown in Figure 3, in this embodiment, based on the observation facing the unloading surface of the turntable 1, the turntable 1 rotates clockwise, and the unloading cross-connection area 12 is located in the lower semicircle area of the surface of the turntable 1. Therefore, the can locating positions 11 at the downstream end of the unloading cross-connection area 12 refer to the can locating positions 11 on the left side.

The conveying system also includes one transition conveying line 6 and one following conveying line 7, and the numbers of the transition conveying line 6 and the following conveying line 7 are both two; the conveying directions of transition conveying line 6 and the following conveying line 7 are the same as the conveying direction of the horizontal conveying surface 22 of the unloading conveying line 2. The conveying paths 4 of the conveying surface of the transition conveying line set downwards and the conveying surface of the following conveying line set upwards are equipped with suction holes 41 and the negative pressure mechanisms are set on the back. The transition conveying line 6 is connected between the downstream end of the unloading conveying line 2 and the upstream end of the following conveying line 7. As the adsorption force generated by the negative pressure mechanism of the transition conveying line 6 is greater than that generated by the negative pressure mechanism of the unloading conveying line 2, it is sufficient to achieve the transfer of the can bodies 3 from the unloading conveying line 2 to the following conveying line 7.

In this embodiment, the conveying speed of the transition conveying line 6 is adjustable; and the conveying speed of the following conveying line 7 is adjustable. Because the speed of the transition conveying belt 6 is different from that of the following conveying line 7, the space adjustment of the can bodies 3 can be achieved.

A conveying box to the entrance of the oven 8 is arranged above the downstream end of the following conveying line 7 to transfer the can bodies 3 to the oven. And the conveying box to the entrance of the oven 8 is provided with a pick-and-place mechanism for the can bodies 3, and the width of the conveying box to the entrance of the oven 8 matches the width of the oven.

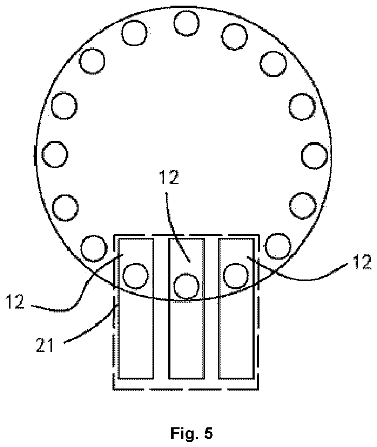

The following the description about the other embodiments and structural variations of the present invention:
1. In the above embodiment, the can locating positions of the unloading cross-connection area are set adjacently on the turntable (see Fig. 3), but the present invention is not limited to this. As several unloading cross-connection areas are mutually independent, the can locating positions corresponding to the unloading cross-connection areas can also be set at intervals on the turntable (see Fig. 4), which is easily understood and accepted by those skilled in the art.
2. In the above embodiment, the can locating positions are evenly distributed on the surface of the turntable in the circumferential direction (see Fig. 3), but the present invention is not limited to this. The can locating positions on the surface of the turntable can also be unevenly distributed in a circumferential direction, as long as the projections of the can locating positions in the horizontal plane in the unloading cross-connection area correspond to and align with the conveying paths in the unloading cross-connection area one by one, which is easily understood and accepted by those skilled in the art.
3. In the above embodiment, the unloading conveying line comprises two conveying paths, but the present invention is not limited to this. For example, the unloading conveying line can also preferably comprise three adjacent conveying paths, wherein the conveying path located in the middle position is set on the same plane as the rotating shaft of the turntable along the central axis of the conveying direction (see Fig. 5). It can be easily understood and accepted by those skilled in the art.
4. In the above embodiment, the blowing mechanism is used as release mechanism, but the present invention is not limited to this. For the different suction mechanisms of the turntable on the can bodies, the release mechanism can be a release mechanism including a push rod, or a mechanism in the negative pressure suction mechanism that can generate a negative pressure weakened state, etc. It can be understood and accepted by those skilled in the art.
5. In the above embodiment, the number conveying paths of transition conveying lines, the following conveying lines and the unloading conveying lines are equal, but the present invention is not limited to this. The following process can adjust the number of conveying lines using an expansion mechanism or a merging mechanism, which is also covered within the protection scope of the present invention.
6. In the above embodiment, the horizontal conveying surface of the unloading conveying line is arranged along the horizontal plane, but the present invention is not limited to this. The horizontal conveying surface of the unloading conveying line can also be arranged at an acute angle with the horizontal plane, which is easily understood and accepted by those skilled in the art.
7. In the above embodiment, the surface of the turntable is perpendicular to the horizontal plane, but the present invention is not limited to this. The above solution where the angle between the surface of the turntable and the vertical direction is less than 20 degrees is covered within the protection scope of the present invention.

It should be noted that the above-described embodiments are only for illustration of technical concept and characteristics of present invention with purpose of making those skilled in the art understand the present invention, and thus these embodiments shall not limit the protection range of present invention. The equivalent changes or modifications according to spiritual essence of present invention shall fall in the protection scope of present invention.

## Claims

1. A can body conveying system comprises a turntable (1) and an unloading conveying line (2), wherein the turntable (1) is rotatably erected by a rotary shaft through its center and the angle between the surface of the turntable (1) and vertical direction is less than 20 degrees; the surface of the turntable (1) is provided with several can locating positions (11) in a circumferential direction, and the can locating position (11) includes a loading station and an unloading station; the unloading conveying line (2) is set corresponding to the unloading station of the turntable (1); wherein:
The unloading conveying line (2) has a vertical conveying surface (21) and a horizontal conveying surface (22), and the vertical conveying surface (21) is arranged vertically and faces the surface of the turntable (1), and the horizontal conveying surface (22) is arranged along the horizontal plane or at an acute angle with the horizontal plane, and the horizontal conveying surface (22) faces upwards; the vertical conveying surface (21) and the horizontal conveying surface (22) are equipped with suction holes (41), negative pressure mechanisms arranged on the back to suck the can bodies (3) under working conditions;
The vertical conveying surface (21) is provided with at least two conveying paths (4) arranged in parallel longitudinally and the areas on the turntable (1) facing each conveying path (1) serve as the unloading cross-connection areas (12); in unloading state, the can locating positions (11) in the unloading cross-connection area (12) correspond to and align with the conveying paths (4) of the vertical conveying surface (21) one by one, so that the can bodies (3) on the can locating positions (11) in the unloading cross-connection area (12) can detach from the turntable (1) and transfer to the corresponding conveying path (4).

2. The can body conveying system according to the Claim 1, wherein: the unloading cross-connection area (12) is provided with a release mechanism; in unloading state, when the can bodies (3) are positioned on the can locating positions (11) at a downstream end of the unloading cross-connection area (12), the release mechanism is activated to detach the can bodies (3) from the surface of the turntable (1).

3. The can body conveying system according to the Claim 1, wherein: the can locating positions (11) of the unloading cross-connection area (12) are set adjacently on the turntable (1).

4. The can body conveying system according to the Claim 3, wherein: the unloading conveying line (2) comprises three conveying paths (4), wherein the conveying path (4) located in middle position is set on the same plane as the rotating shaft of the turntable (1) along the central axis of the conveying direction.

5. The can body conveying system according to the Claim 3, wherein: the unloading conveying line (2) comprises two conveying paths (4).

6. The can body conveying system according to the Claim 1, wherein: the angle between the surface of the turntable (1) and vertical direction is 0 degree, 10 degrees, or 13 degrees.

7. The can body conveying system according to the Claim 1, wherein: the conveying system also includes at least one transition conveying line (6) and at least one following conveying line (7), wherein the numbers of conveying paths (4) of transition conveying lines (6) the following conveying lines (7), and the unloading conveying lines (2) are equal; the conveying directions of transition conveying line (6) and the following conveying line (7) are the same as the conveying direction of the horizontal conveying surface (22) of the unloading conveying line (2);
The conveying paths (4) of the conveying surface of the transition conveying line set downwards and the conveying surface of the following conveying line set upwards are equipped with suction holes (41), negative pressure mechanisms set on the back; the transition conveying line (6) is connected between a downstream end of the unloading conveying line (2) and an upstream end of the following conveying line (7) to transfer the tank bodies (3) from the unloading conveying line (2) to the following conveying line (7).

8. The can body conveying system according to the Claim 7, wherein: the conveying speed of the transition conveying line (6) is adjustable; and the conveying speed of the following conveying line (7) is adjustable.

9. The can body conveying system according to the Claim 6, wherein: a conveying box to the entrance of the oven (8) is arranged above a downstream end of the following conveying line (7) to transfer the can bodies (3) to the oven; And the conveying box to the entrance of the oven (8) is provided with a pick-and-place mechanism for the can bodies (3), and the width of the conveying box to the entrance of the oven (8) matches the width of the oven.

10. The can body conveying system according to the Claim 1-9, wherein: several can locating positions (11) are evenly distributed on the surface of the turntable (1) in a circumferential direction.
